# EUROPEAN PATENT APPLICATION

(11) **EP 4 345 764 A1**
(43) Date of publication of application: **03.04.2024**
(21) Application number: 22198171.5
(22) Date of filing: 27.09.2022
(51) Int. Cl.: G06V 10/20, G06V 10/24

(54) **TECHNIQUE FOR ASSIGNING MARKER IDENTITIES TO MARKERS OF A TRACKER**

(71) Applicant: Stryker European Operations Limited, Carrigtwohill, Co. Cork T45 HX08 (IE)
(72) Inventor: UMBDENSTOCK, Emeric, 79098 Freiburg (DE); FRANITZA, Florian, 79238 Ehrenkirchen (DE); KOEPFF, Marvin, 79227 Schallstadt (DE)
(74) Representative: Röthinger, Rainer

(57) **Abstract**

A method, computer program product, device, and tracking system for assigning marker identities to markers of a tracker are provided. The tracker comprises a reference detectable in a visible light spectrum, and the markers are detectable at least in an infrared light spectrum. The markers are arranged in a pre-determined relationship relative to the reference and the pre-determined relationship is indicative of the marker identities. A method implementation comprises receiving first image data of the markers captured in the infrared spectrum. The method further comprises receiving second image data of the reference captured in the visible light spectrum, wherein the first and second image data in some variants were captured under at least essentially the same viewing angle. The method also comprises determining the markers in the first image data and determining the reference in the second image data. The method further comprises assigning the marker identities to the markers determined in the first image data based on the reference determined in the second image data and the pre-determined relationship.

## Description

### Technical Field

The present disclosure generally relates to the tracking of objects, for example in the field of computer-assisted surgery. In particular, a technique for assigning marker identities to markers of a tracker is presented. The technique presented herein can be practiced in the form of a method, a computer program product, a device and a tracking system.

### Background

Many computer-assisted surgical procedures make use of a tracking system that tracks a surgical object, such as a patient, by capturing image data of a tracker attached to the surgical object. To this end, the tracker commonly has a plurality of markers that can be detected by a camera of the tracking system. Based on a pre-determined marker arrangement known to the tracking system and a marker arrangement determined from image data of the tracker, the tracking system can determine the position and orientation (i.e., the pose) of the tracker and, consequently, of the surgical object in the surgical procedure.

Determination of the tracker pose generally requires a preceding fitting or matching between the pre-determined marker arrangement and the captured marker arrangement. To this end, at least at the start of the tracking procedure, marker identities of the pre-determined marker arrangement need to be assigned to markers identified in the image data.

There exist trackers with a large number of markers, such as 6, 10 or more. With an increasing number of markers, it becomes increasingly challenging to unambiguously identify the markers in the image data for fitting purposes, in particular since not all markers may be visible to the camera due to line-of-sight issues. The resulting ambiguity may result in an incorrect assignment of marker identities and, as a consequence, in an incorrect fitting, an unprecise tracking and an improper surgical outcome.

The ambiguity in the assignment of marker identities may be resolved by providing a tracker with active markers (such as light emitting diodes, LEDs) and capabilities to communicate with a central processing device of the tracking system. For example, the tracker may have wireless communication capabilities that allow the tracking system to sequentially trigger individual ones of the active markers so that only a single marker is active at a given point in time for a unique identification. However, such trackers require a power source, communication capabilities and active markers. As a result, the tracker has higher manufacturing costs and is less suitable to be used as a disposable tracker. Also, the tracker cannot be equipped with passive (e.g., reflective) markers.

### Summary

There is a need for a tracking technique that solves one or more of the aforementioned or other problems.

According to a first aspect a method for assigning marker identities to markers of a tracker is provided. The tracker comprises a reference detectable in a visible light spectrum and the markers are detectable at least in an infrared light spectrum, wherein the markers are arranged in a pre-determined relationship relative to the reference and wherein the pre-determined relationship is indicative of the marker identities. The method comprises receiving first image data of the markers captured in the infrared spectrum. The method further comprises receiving second image data of the reference captured in the visible light spectrum. The method comprises determining (e.g., detecting) the (e.g., positions of the) markers in the first image data and determining (e.g., detecting) the (e.g., position of the) reference in the second image data. The method further comprises assigning the marker identities to the markers determined in the first image data based on the reference determined in the second image data and the pre-determined relationship.

The pre-determined relationship may be known a priori (e.g., in view of pre-determined hardware configuration of the tracker carrying the markers). The pre-determined configuration may define positions associated with the marker identities relative to the reference. The pre-determined relationship may define the positions associated with the marker identities and a position of one or more portions of the reference in a common coordinate system (e.g., in a coordinate system of the tracker). The pre-determined relationship may define a two-dimensional or three-dimensional virtual model of the tracker. The model may at least define the positions associated with the marker identities and the position of the one or more portions of the reference.

Assigning the marker identities may comprise determining the positions associated with the marker identities in the second image based on the reference determined in the second image data and the pre-determined relationship. The method may further comprise transferring the determined positions associated with the marker identities into the first image data. At least one marker identity may be assigned to a closest located available marker determined in the first image data. The marker identities may be assigned in an order that prioritizes shortness of distances between the determined markers and transferred positions of the marker identities available for assignment.

The method may comprise providing a virtual marker template that defines a combination of a pre-determined unmodified version of the reference and the pre-determined relationship. The method may further comprise modifying the virtual marker template in such a way that the reference of the marker template aligns with the reference determined in the second image data. In such a case, the marker identities may be assigned based on the modified relationship of the modified marker template. Modifying the virtual marker template may comprise at least one of rotating, translating, scaling, bending, stretching and compressing the virtual marker template.

The tracker may comprise more than 3, more than 4, more than 6, more than 10 or more than 15 markers. One or more of the markers may be passive (i.e., reflecting) markers. One or more of the markers may be active. An active marker may comprise an infrared light emitting diode, IR-LED. The tracker may comprise a circuitry that controls light emission of the IR-LED. The circuit may be configured to limit a current for each of the IR-LED to not exceed 15mA. The circuit may comprise a switch operable (e.g., exactly once and not repeatedly) to close the circuitry.

The tracker may comprise a substrate supporting the markers. In some variants, the substrate is at least one of bendable, stretchable and compressible so that relative positions between the markers are variable. In such or other variants, the substrate may be flexible. Alternatively, the substrate may be rigid. The substrate may comprise a meandering shape. The substrate may define a closed shape with a central opening, such as a ring-shaped or rectangular frame. The markers may be distributed (e.g., in a closed line) over an extension of the frame.

The method may comprise tracking the tracker based on third image data captured in the infrared spectrum and using the assigned marker identities. The third image data may be captured by the same camera that captured the first image data or by another camera.

The reference may comprise at least one of: one or more of the markers, at least a portion of a tracker contour (e.g., a contour of a substrate supporting the markers), one or more electrical connections of the markers (e.g., printed power lines), a reference printing, and a dedicated reference element. The dedicated reference element may be removable from (e.g., the remainder of) the tracker.

In some variants, the first and second image data were captured under at least essentially the same viewing angle (e.g., using an integrated camera system having co-located visible and IR imaging capabilities). In other variants, the cameras with visible and IR imaging capabilities are spaced apart in a pre-determined spatial relationship. In such variants, the pre-determined spatial relationship may additionally be considered when assigning the marker identities.

According to a second aspect, a computer program product is provided. The computer program product comprises instructions that, when executed by at least one processor, cause the at least one processor to carry out any of the methods described herein. The computer program product may be stored on a non-volatile data storage. The data storage may comprise a hard drive, a compact disc, a USB drive, or a memory card.

According to a third aspect, a device for assigning marker identities to markers of a tracker is provided. The tracker comprises a reference detectable in a visible light spectrum and the markers are detectable at least in an infrared light spectrum, wherein the markers are arranged in a pre-determined relationship relative to the reference and wherein the pre-determined relationship is indicative of the marker identities. The device is configured to receive first image data of the markers captured in the infrared spectrum. The device is further configured to receive second image data of the reference captured in the visible light spectrum. The device is configured to determine the markers in the first image data and to determine the reference in the second image data. The device is further configured to assign the marker identities to the markers determined in the first image data based on the reference determined in the second image data and the pre-determined relationship.

The device may be configured to perform at least one of the steps according to any method described herein.

According to a fourth aspect, a tracking system is provided. The tracking system comprises the device as described herein and the tracker. In certain variants, the tracker may be configured such its markers can only continuously emit light when being activated. In such or other variants, the tracker may be configured such that the markers cannot be activated individually (but, e.g., only collectively). One or more of the markers may comprise an infrared light emitting diode, IR-LED, wherein the IR-LED is configured to emit light continuously. The tracker may not comprise any dedicated (e.g., wireless) communication capabilities for receiving signals from and/or transmitting signals to a central processing device of the tracking system.

The tracking system may further comprise a camera system with an IR camera module configured to capture the first image data in the IR light spectrum and an optical camera module configured to capture the second image data in the visible light spectrum. The IR camera module and the optical camera module may be configured or configurable to assume substantially the same viewing angle. As an example, both camera modules may be integrated into a single housing.

### Brief Description of the Drawings

Further details, advantages and aspects of the present disclosure will become apparent from the following embodiments taken in conjunction with the drawings, wherein:
- Fig. 1: shows a tracking system with a device for assigning marker identities and a tracker;
- Fig. 2A: shows a first example of the tracker with markers;
- Fig. 2B: shows an example of a pre-determined relationship that may be used with the tracker shown in Fig. 2A;
- Fig. 2C: shows a second example of the tracker with four examples of a nonstraight contour;
- Fig. 2D: shows a third example of the tracker with reference printings;
- Fig. 3A: shows a fourth example of the tracker;
- Fig. 3B: shows a fifth example of the tracker with a dedicated reference element;
- Fig. 4: shows a flow diagram of a method for assigning the marker identities to the markers of the tracker;
- Fig. 5A: shows the tracker attached to the back of a patient;
- Fig. 5B: shows an example of first image data;
- Fig. 5C: shows an example of second image data;
- Fig. 5D: shows the positions associated with the marker identities determined in the second image data;
- Fig. 5E: shows the positions of marker identities in the first image data;
- Fig. 5F: shows the first image data with the markers and the assigned marker identities;
- Fig. 6A: shows six markers with six transferred positions of marker identities;
- Fig. 6B: shows a first marker identity assigned to a first marker;
- Fig. 6C: shows second marker identity assigned to a second marker;
- Fig. 6D: shows all but a seventh marker identity assigned to a marker;
- Fig. 6E: shows the markers and marker identities after complete assignment;
- Fig. 7A: shows an example of a deformable tracker that is attached to the back of a patient;
- Fig. 7B: shows an example of a virtual marker template;
- Fig. 7C: shows first image data captured under the viewing angle as shown in Fig. 7A;
- Fig. 7D: shows second image data captured under the viewing angle as shown in Fig. 7A;
- Fig. 7E: shows the virtual marker template of Fig. 7B modified to align with the reference of the second image data; and
- Fig. 7F: shows the first image data with the marker identities assigned to the markers.

### Detailed Description

In the following description, exemplary embodiments of a tracker, a device for assigning marker identities, a tracking system and a method for assigning marker identities to markers of the tracker will be explained with reference to the drawings. The same reference numerals will be used to denote the same or similar structural features.

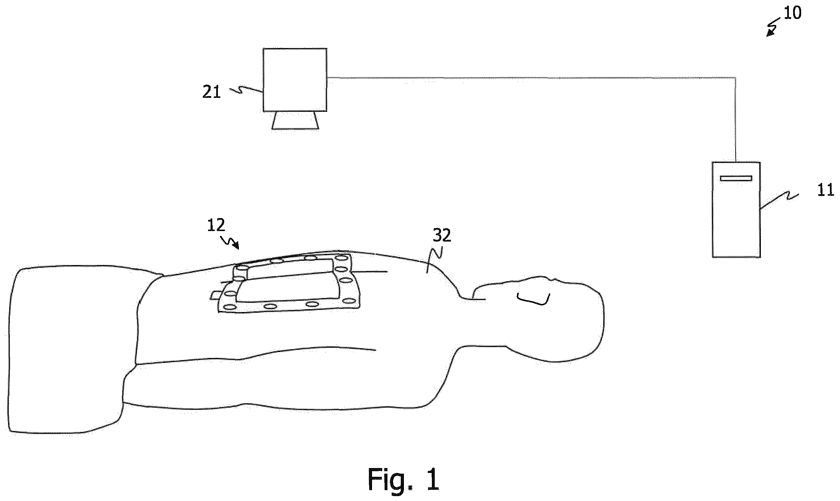

Fig. 1 shows a tracking system 10 with a device 11 for assigning marker identities and with a tracker 12. The tracker 12 is attached to a patient 32. In the example of Fig. 1, the tracker 12 has a rectangular, frame-like configuration and is sticked (e.g., adhesively attached or glued) to a back of the patient 32. In other cases, the tracker 12 has a different configuration and is attached (e.g., clamped) to a patient bone.

The tracking system 10 further comprises a camera system 21. The camera system 21 has an IR camera module configured to capture first image data in at least the IR spectrum and an optical camera module configured to capture second image data in at least the visible spectrum. The IR camera module and the optical camera module are configured or configurable to assume substantially the same viewing angle. To this end, both camera modules may be integrated in a single camera housing to ensure that they are substantially co-located. The IR camera module and the optical camera module may be comprised by the same camera or by two separate cameras. The optical camera module may comprise a stereo camera with two separate and spaced apart imaging entities. The IR camera module may be located between the two imaging entities.

The device 11 for assigning marker identities is configured to receive the first and second image data from the camera system 21 (e.g., via a wired or wireless connection). The device 11 may be a computer or a part of a computer or be at least partially provided by a remote desktop or cloud computing resources. The device 11 is configured to perform any of the method aspects described herein. To this end, the device 11 may comprise a data storage with memory storing instructions that, when executed by at least one processor, cause the at least one processor to carry out any of the method aspects described herein.

In some variants, the tracking system 10 with device 11 for assigning marker identities is comprised by or integrated in a surgical navigation system. The surgical navigation system is configured to generate navigation instructions for a surgeon or a surgical robot based on tracking information generated by the tracking system 10.

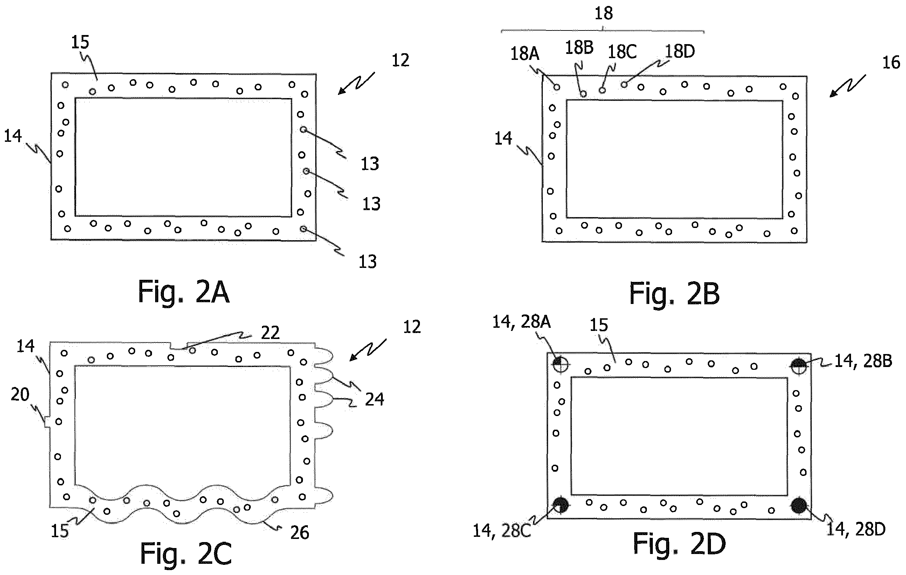

Fig. 2A shows a first example of a tracker 12 that may be used in the scenario illustrated in Fig. 1. The tracker 12 comprises a frame-shaped substrate 15 supporting dozens of markers 13. The substrate 15 defines a central opening, or window, through which a surgical procedure may be performed (e.g., in a minimally invasive manner). In other examples, the substrate 15 may be U-, V- or O-shaped (optionally with no central window).

The markers 13 of the tracker are detectable in an infrared spectrum (e.g., between wavelengths of 700 nm and 1 pmm, such as between 800 nm to 900 nm). At least one or more of the markers 13 may be passive markers configured to reflect light in the infrared spectrum. To this end, at least one or more of the markers 13 may each comprise a reflecting material, foil, or dye. At least one or more of the markers 13 may be active markers configured to emit the infrared spectrum. To this end, at least one or more of the markers 13 may each comprise an IR-LED. At least one or more of the markers 13 may comprise a waveguide such as an optical fibre or a side emitting optical fibre optically coupled to a light emitting element. The tracker 12 may comprise both active and passive markers (e.g., one or more IR reflectors and one or more IR-LEDs).

The tracker 12 further comprises a reference 14 detectable in a visible light spectrum (e.g., a light spectrum visible to the human eye, for example a light spectrum between wavelengths of 400 nm and 700 nm). The visible light spectrum may consist of shorter wavelengths than the infrared light spectrum. In the example shown in Fig. 2A, the reference comprises (or may be part of or consist of) a contour of the tracker 12. In particular, the reference may be defined by the tracker substrate 15 (e.g., by an inner or outer contour of the frame, or a portion thereof). Alternatively or additionally, the reference 14 may comprise the markers 13 or at least a subset of the markers 13. In such a case, the markers 13 are detectable in the visible light spectrum. To this end, the markers 13 may comprise elements that emit or reflect light in the visible spectrum. As an example, an IR-LED can be detected in the IR light spectrum when activated and also in the visible light spectrum (even when not activated).

Fig. 2B shows an example of a pre-determined relationship 16 between the markers 13 and the reference 14, that may be used with the tracker 12 shown in Fig. 2A. Such pre-determined relationship may be indicative of the "full" geometry of the tracker 12 with its markers 13. As will be appreciated, for each dedicated tracker 12, the markers 13 (in Fig. 2B: indicated as small circles with center points indicative of the marker positions) are arranged in a pre-determined relationship relative to the reference 14 (in Fig. 2B: the inner and outer contour of the frame-shaped substrate 15), and the pre-determined relationship may be indicative of marker identities. The pre-determined relationship 16 may be provided in the form a three-dimensional or two-dimensional virtual model of the tracker 12, as indicated in Fig. 2B. The pre-determined relationship 16, and in particular the model, may be provided in the form of positions of the markers 13 and the reference 14 in a coordinate system or in the form of positions of the markers 13 and the reference 14 relative to each other.

The pre-determined relationship 16 assigns to each marker 13 an identity 18 (e.g., marker_ID_one, marker_ID_two, marker_ID_three,... or 1, 2, 3, ..., etc.). The example shown in Figs. 2A has thirty-seven markers 13. Consequently, the pre-determined relationship 16 comprises thirty-seven identities 18, wherein exemplarily four of the identities are labelled with reference signs 18A, 18B, 18C, and 18D. Alternatively, the pre-determined relationship 16 may have a number of identities 18 that is smaller than the number of markers 13 (e.g., in case not all markers 13 are to be used or some of the markers 13 are defective). Furthermore, the tracker 12 may have any other number of markers 13 such as three, four, five, six, seven, eight, nine, ten, or more.

Figs. 2A and 2B show a tracker 12 with a reference 14 comprising a rectangular, frame-shaped contour defined by straight lines. Alternatively, the contour may comprise a more or less complex shape. Fig. 2C shows a second example of the tracker 12 with four examples of non-straight contours. For conciseness sake, the four examples are shown on the same tracker 12. It is to be understood that the tracker contour may have only one non-straight portion or more than one non-straight portion.

On the left side of the tracker 12 illustrated in Fig. 2C, the tracker 12 has a first reference 14 comprising a protrusion 20. The first reference 14 may be defined only by the protrusion or by the protrusion and at least a portion of the adjacent edge. On the upper side, the tracker 12 has a second reference 14 comprising a recess 22. The second reference may be defined only the recess 22 or the recess and at least a portion of the adjacent edge. On the right side, the tracker 12 comprises a third reference 14 with a plurality of protrusions 24. The protrusions 24 are arranged nonequidistantly. Therefore, the third reference 14 has less ambiguity in regards to orientation. Alternatively, all or some of the protrusions 24 may be arranged equidistantly. Further alternatively, some or all of the protrusions 24 may instead be recesses (such as the recess 22). On the bottom side, the tracker 12 comprises a fourth reference 14 defined by a meandering shape 26 of the substrate 15. The meandering shape 26 may comprise a wave shape (e.g., a sinus wave) or a zig-zag shape.

Fig. 2D shows a third example of the tracker 12. In this example, the reference 14 comprises four reference printings 28A, 28B, 28C, 28D. The reference printings 28A, 28B, 28C, 28D may be printed on the substrate 15 or other surfaces of the tracker 12. The reference printings 28A, 28B, 28C, 28D depicted in Fig. 2D are optically distinguishable in order to reduce ambiguity in regards to orientation of the tracker 12. Alternatively, the reference printings 28A, 28B, 28C, 28D may be optically indistinguishable. Of course, in some variants more or less than four reference printings 28A, 28B, 28C, 28D may be provided.

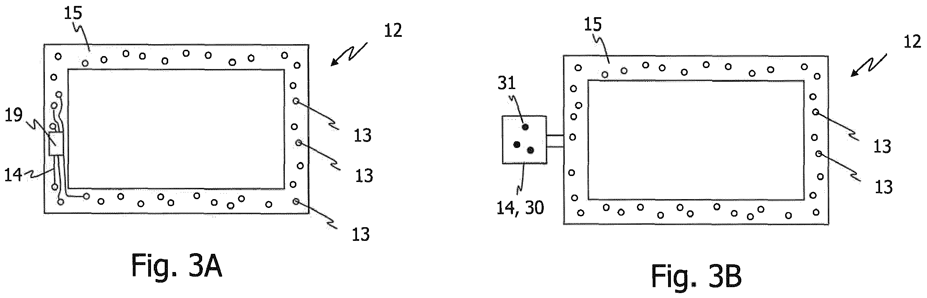

Fig. 3A shows a fourth example of the tracker 12. In this example, the reference 14 comprises electrical connections of the tracker 12 such as electrical connections between the markers 13 and a power source 19 (such as a battery). The electrical connections are typically printed on the substrate 15 (possibly with a transparent coating being provided thereon) and, therefore, are visibly detectable.

Fig. 3B shows a fifth example of the tracker 12. In this example, the reference 14 comprises a dedicated reference element 30. The reference element 30 shown in Fig. 3B has reference markers 31 that are detectable in (e.g., an image acquired using) the visible light spectrum. The dedicated reference element 30 may be removable. To this end, the tracker 12 may have an attachment element (e.g., an adhesive, a snap-in connector, a magnet, or a hook-and-loop fastener) configured to attach the reference element 30 to the rest of the tracker 12 (e.g., the substrate 15) when needed.

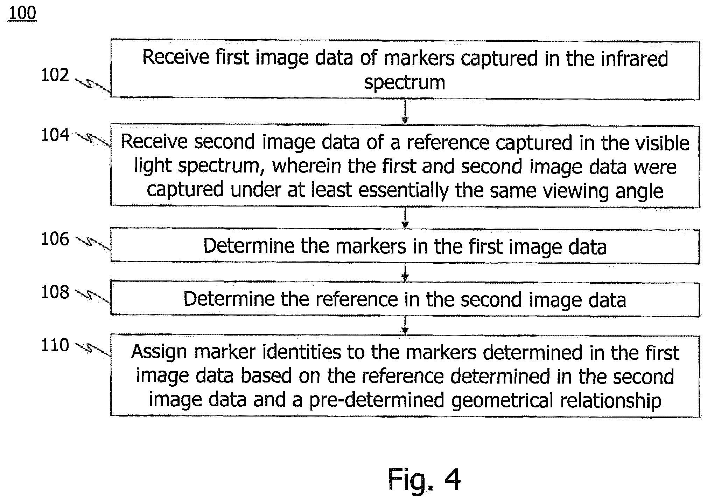

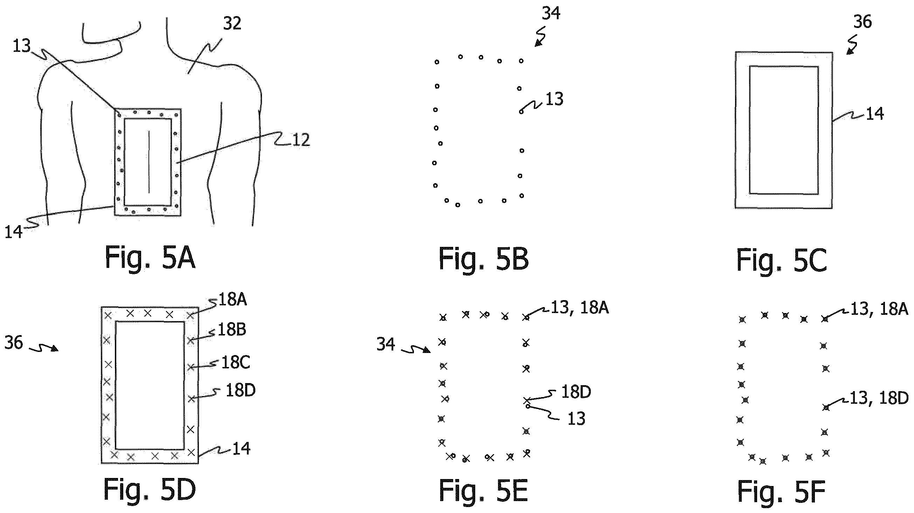

The reference 14 and the pre-determined relationship 16 can be used to assign marker identities 18 to the markers 13, as will be now be described with reference to Fig. 4 and Figs. 5A to 5F. Fig. 5A illustrates the tracker 12 (as an example: the one depicted in Fig. 2A) attached to the back of a patient 32.

Fig. 4 shows a flow diagram 100 of a method for assigning the marker identities 18 to the markers 13 of the tracker 12. As indicated in Fig. 4, the method comprises, in step 102, receiving first image data of the markers 13 captured by the camera system 21 (see Fig. 1) in the infrared spectrum. Fig. 5B schematically visualizes an example of the first image data 34. The first image data 34 is captured in the infrared spectrum and is therefore representative of the markers 13 reflecting or emitting light in the infrared spectrum. Each circle in Fig. 5B corresponds to one marker 13 detected by the camera system 21 in the infrared spectrum based on the first image data.

The method also comprises, in step 104, receiving second image data of (at least) the reference 14 captured by the camera system 21 in the visible light spectrum. Steps 102 and 104 may be performed in any order or in parallel.

Fig. 5C illustrates an example of the second image data 36. The second image data 36 is captured in the visible spectrum and is therefore representative of the reference 14. It will be appreciated that the second image data 36 upon being taken by the camera system 21 will be indicative of further information, such as details of the markers 13 detectable in the visible spectrum, the patient, and so on. Such further information may be removed using image processing techniques so as to specifically identify the reference 14. The image processing techniques may operate on the basis of pre-determined information about the reference 14 so as to be able to separate the reference 14 from the further information in the second image data.

Such or other imaging processing techniques may also be applied to the first image data illustrated in Fig. 5B.

In some cases, the first and second image data 34, 36 were captured by the camera system 21 under at least essentially the same viewing angle. In case the first and second image data 34, 36 were captured under substantially different viewing angles, supplementary spatial information may be provided that allows to compensate for the different viewing angles in the further processing of the first and second image data 34, 36.

The method further comprises, in step 106, determining (e.g., detecting) the markers 13 in the first image data 34. The markers 13 may be determined (e.g. detected) based on at least one of an intensity, an intensity gradient, and an intensity maximum in the first image data 34. For example, each intensity (e.g., brightness) value in the first image data 34 above a certain threshold may be identified to correspond to a dedicated marker 13. If needed, the first image data 34 may initially be filtered to remove artefacts clearly note attributable to a marker 13 (as the marker artefacts have predefined shapes and/or brightness values that may serve as filter criterion). Alternatively or additionally, a known arrangement of the markers 13 (e.g., derived from the pre-determined relationship) may be modified (e.g., at least one of rotated, translated, and scaled) until the modified arrangement aligns with features identified in the first image data 34.

Still referring to Fig. 4, the method further comprises, in step 108, determining (e.g., detecting) the reference 14 in the second image data. The reference 14 may be identified using at least one of the approaches described above with reference to determining the markers 13 in the first image data 34. In particular, image processing techniques may be applied to filter out the reference 14 based on a predefined shape or colour of the reference 14.

The method further comprises, in step 110, assigning the marker identities 18 to the markers 13 determined in the first image data 34 based on the reference 14 determined in the second image data 36 and the pre-determined relationship 16. The reference 14 determined in the second image data 36 and the pre-determined relationship 16 (as, e.g., pre-stored by the tracking system) provide sufficient information for assigning the marker identities 18. The information may be mostly processed geometrically and, therefore, can be processed in different ways. In the following, a visually accessible way will be described for illustration purposes. It should be noted that the method is not limited thereto.

Step 110 may, for example, comprise determining the positions associated with the marker identities 18 in the second image 36 based on the reference 14 determined in the second image data 36 and the pre-determined relationship 16. To this end, features of the reference 14 of the pre-determined relationship 16 may be aligned with features of the reference determined in the second image data 36. For example, the pre-determined relationship may be a virtual model that is applied or modified until the reference 14 of the virtual model aligns with the reference 14 of the second image data 36. The pre-determined relationship is also indicative of positions of the marker identities 18. During the alignment, the positions of the marker identities move with the virtual model. After the alignment process fulfils a certain abortion criterion, the positions associated with the marker identities 18 of pre-determined relationship are located at (or at least close to) the positions of the markers 13 (associated with the identities 18) in the second image data 36.

An alternative process to aligning a virtual model is to individually determine the positions of the marker identities 18 based on the reference 18. For example, the pre-determined relationship 16 may define a relative position of an individual position of a marker identity 18 relative to at least one individual feature of the reference 16, e.g., in form of a vector or matrix. Step 110 may then comprise identifying the at least one individual feature in the second image data 34 and determining the position of the individual marker identity 18 based on the at least one individual feature and the relative position. This process is then repeated for the remaining marker identities 18, at least for those markers 13 that can be identified in the first image data 34.

Fig. 5D shows the positions associated with the marker identities 18 determined in the second image data 36. These positions can be located based on the reference without having to directly determine the markers 13 in the second image data 36. Therefore, the second image data 36 can be captured in the visible light spectrum, even if the markers 13 are not detectable in the visible light spectrum. However, the markers 13 do not have to be undetectable in the visible light spectrum. The markers 13 may be detectable in the visible spectrum as well (e.g., in the form of surface mounted device, SMDs, constituting the LEDs), in which case, they may even be used as a reference 14.

The method illustrated in Fig. 4 may further comprise transferring the determined positions associated with the marker identities 18 into the first image data 34 (not shown in Fig. 4). Due to the at least essentially same viewing angle or compensated different viewing angles, a feature (e.g., the markers 13) represented by image points (e.g., pixels) in one of the first and second image data 34, 36 is represented by essentially the same image points (e.g., pixels) in the other of the first and second image data 34, 36 (assuming that the corresponding imaging sensors have properly been calibrated or that a calibration routine has been applied to one or both of the first image data 34 and the second image data 36).

For example, the first and second image data 36 may each comprise an image with pixels that have designated positions on a pixel grid (as an exemplary coordinate system). In such a case, if one of the markers 13 may be located on a position on a grid (e.g., pixel position x=133, y=354) in the first image data 34 then the same marker 13 is located on the same of close-by position on a grid of the second image data 36 (e.g., pixel position x=133, y=354 or x=131, y=355). As a result, locating a dedicated marker 13 in one of the first and second image data 34, 36 allows locating the dedicated marker 13 in the other one of the first and second image data. The above example assumes an at least essentially identical image resolution of the first and second image data (e.g., 1024x768 pixels). In case of different resolutions, the grid or resolution of at least one of the first and second image data 34, 36 may be rescaled in order to obtain an at least essentially identical image resolution.

In the case of non-identical viewing angles of the first and second image data 34, 36, at least one of the first and second image data 34, 36 may optically be modified (e.g., at least one of tilted, rotated and scaled). The modification may be dependent on a spatial relationship (e.g., distance and angular relationship) between the two viewing angles and an expected (or otherwise determined) distance of the capturing cameras or camera modules relative the tracker 12. For example, if the cameras or camera modules that capture the first and second image data 34, 36 are 20 cm apart and the tracker 12 is expected to be located 2 m away from the cameras or camera modules, an angular difference between the two viewing angles may be determined as arctan(0.2m / 2 m) ≈5.7°. In such a case of the first and second image data 36 may be tilted by 5.7° to improve the accuracy of the positions of the marker identities 18.

The determined positions associated with the marker identities 18 may be transferred by superimposing the first and the second image data 34, 36. Alternatively or additionally, the positions of marker identities 18 (e.g., in the from of a sequence of numbers 1, 2, 3,... or as a geometric pattern) in the pixel grid of the second image data 36 may be transferred to the first image data 36. Fig. 5E shows the (e.g., transferred) positions of marker identities 18 in the first image data 34. The identities 18 can subsequently be assigned to the markers 13. Fig. 5F shows the first image data 34 with the markers 13 and the assigned marker identities 18.

In an optimal setup, the positions of the marker identities 18 would perfectly align with the positions of the markers 13. However, imperfections in the setup (e.g., limited camera resolution, rounding errors, slightly different viewing angles, etc.) may lead to slight offsets between the positions of the marker identities 18 and the markers 13 such as depicted in Fig. 5E. In order to account for the offsets, the method illustrated in Fig. 4 may comprise assigning at least one marker identity 18 to a closest located available marker 13 determined in the first image data 34. If the setup is sufficiently accurate, the positions of the marker identities 18 are located closest to their respective markers 13. Therefore, assigning the marker identity 18 to the closest located available marker 13 increases the chance of assigning the correct identity 18 despite possible offsets.

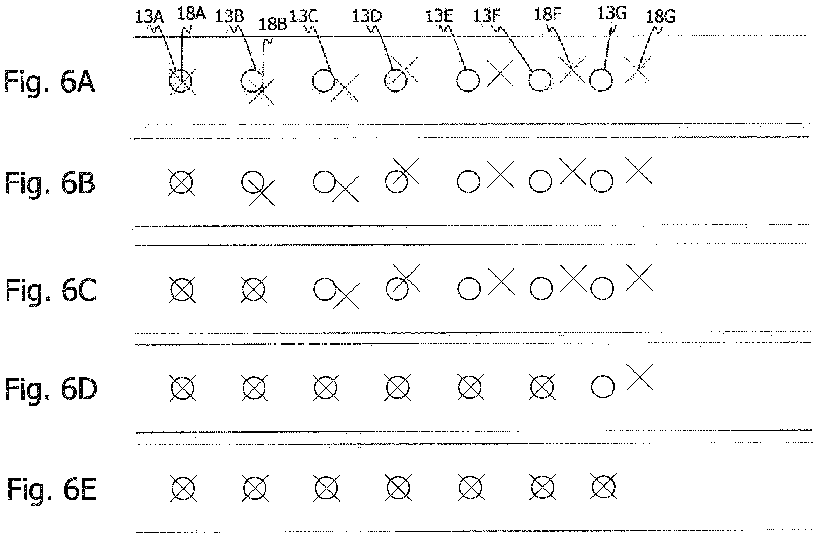

A distance-based assignment as described above addresses the question which identity 18 to assign to which marker 13. The accuracy of the assignment may further be improved be defining the order which the identities 18 are assigned. The marker identities 18 may be assigned in an order that prioritizes shortness of distances between the determined markers 13 and transferred positions of the marker identities 18 available for assignment, as will now be described with reference to an example depicted in Figs. 6A to E.

Fig. 6A exemplarily shows the geometric relationship of six markers 13 with six transferred positions of marker identities 18. For a first to a sixth marker 13A-F, the closest position of a marker identity 18 is the correct marker identity 18 to be assigned. However, a distance from a position of the sixth marker identity 18F is larger to its corresponding sixth marker 13F than to a seventh marker 13G. If assigning identities were to begin at the seventh marker 13G, the sixth marker identity 18F would be incorrectly assigned to the marker 13G. If, on the other hand, marker identities 18 are assigned in an order that prioritizes shortness of distances between the determined markers 13 and transferred positions of the marker identities 18 available for assignment, assignment starts with the shortest distance.

In the example shown in Fig. 6A, the first marker 13A and the first marker identity 18A have the shortest distance compared to the distances between the other markers 13 and their closest marker identity 18. Therefore, the first assignment is performed between the first marker 13A and the first marker identity 18A, as shown in Fig. 6B. As a result, the first marker 13A and the first marker identity 18A are no longer available for assignment with the remaining markers 13 and marker identities 18A. Looking at the remaining markers 13 and marker identities 18A in Fig. 6B, the second marker 13B and the second marker identity 18B have the shortest distance. Therefore, the second marker identity 18B is assigned to the second marker 13B, as shown in Fig. 6C, and both are no longer available for assignment. Using the shortness of distances as a basis for assignment priority, the third, fourth, fifth, and sixth marker identities 18C-F are thus assigned to the markers 13C-F. Fig. 6D shows that after these assignments the closest available marker identity 18 for the seventh marker 13G is the seventh marker identity 18G, which is the correct marker identity 18G. Fig. 6E shows the markers 13 and marker identities 18 after the assignments are complete. Prioritizing shorter distances thus resolved the ambiguity for seventh marker 13G and prevented incorrect marker assignment.

In some implementations, the second image data 36 may represent the reference 14 of the tracker 12 in a distorted or tilted way. This may be the case, for example, when the second image data 36 is captured under a shallow viewing angle and/or when the tracker 12 has a deformed substrate 15 (e.g., at least one of bent, stretched, and compressed).

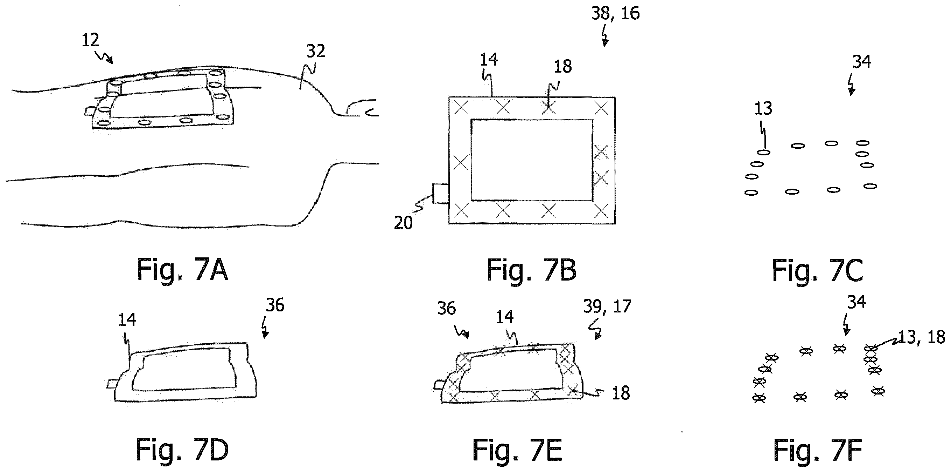

Fig. 7A shows an example of a deformable tracker 12 that is attached (e.g., glued or sticked) to the back of a patient 32. The tracker 12 deforms in order to align with a contour of the patient's back. Furthermore, the first and second image data 34, 36 have been captured from a tilted viewing angle as illustrated in Fig. 7A. In such a scenario, the method illustrated in Fig. 4 may further comprise providing a virtual marker template 38 (see Fig. 7B) that defines a combination of a pre-determined unmodified version of the reference 14 and the pre-determined relationship 16. The virtual marker template 38 comprises positions of marker identities 18 relative to a reference 14. The reference 14 in the example shown in Fig. 7B comprises a contour that has a protrusion 20. However, any other reference 14 may be used instead.

Fig. 7C shows the first image data 34 captured under the viewing angle indicated in Fig. 7A. As a result of the tilted viewing angle and the deformation of the tracker 12, the arrangement of the markers 13 captured in the first image data 34 appear modified compared to the positions of the marker identities 18 in the pre-determined relationship 16 and, therefore, also in the virtual marker template 38.

Fig. 7D shows the second image data 36 captured under the viewing angle shown in Fig. 7A. Similarly to the first image data 34, the reference 14 appears modified in second image data 36. For example, in Fig. 7D, an upper edge of the tracker 12 appears shorter than a lower edge of the tracker 12. Furthermore, a left and right edge of the tracker 12 appears rounded and with a step in the middle.

The virtual marker template 36 may now be modified in such a way that the reference 14 of the marker template 36 aligns with the reference 14 determined in the second image data 36, wherein the marker identities 18 are assigned based on the modified relationship 14 of the modified marker template 36. The corresponding procedure may comprise identifying (e.g., by contrast, colour and/or pattern) features (e.g., points, lines or corners) of the reference 14 in the second image data 36 and modifying the virtual marker template 36 (e.g., at least one of rotating, stretching, compressing, scaling, and tilting) in a way that the identified features (e.g., points, lines or corners) of the reference 14 in the second image data 36 align with the same features of the reference 14 of the virtual marker template 36. Fig. 7E shows a modified marker template 39 of Fig. 7B modified in such a way that its reference 14 aligns with the reference determined in the second image data 36 of Fig. 7D.

The modified marker template 39 comprises the pre-determined relationship 16, which is transformed into a modified relationship 17 along with the modification of the virtual marker template 36. Since the positions of the marker identities 18 are part of the modified relationship 17, the positions of the marker identities 18 have been modified in tandem with the modification of the virtual marker template 36. The modified positions of the marker 18 identities can subsequently be transferred from the second image data 36 to the first image data as described above. Fig. 7G shows the first image data 34 with the positions of the marker identities 18 of the modified relationship 17. Because the modified marker template 39 aligns with the reference 14 of the second image data 36, the positions of the marker identities 18 at least partially align with the positions of the markers 13 of the first image data 34. The marker identities 18 may then be assigned to the markers 13 based on the modified relationship 17 of the modified marker template 39. Fig. 7F shows the first image data 34 with the marker identities 18 assigned to the markers 13.

The modification of the virtual marker template 36 increase the range viewing angles under which the first and second image data 34, 36 can be captured, as the modification can compensate for a tilting of the tracker 12 relative to the pre-determined relationship 16. Furthermore, the tracker 12 may comprise a substrate 15 supporting the markers 13, wherein the substrate 15 is at least one of bendable, stretchable and compressible so that relative positions between the markers 13 are variable. The variability of the positions of the markers 13 can also be compensated by the modification of the virtual marker template 36.

In case the camera system 21 comprises stereo imaging capabilities in the infrared light spectrum, but also in other cases, additional geometric information can be evaluated in step 110. Such additional geometric information can relate to predefined geometric details of the substrate 15 on which the markers 13 are arranged (especially for non-planar substrates 15, e.g., in the form a cylinder or a pyramid). Based on an orientation of the substrate 15 determined in the visible light spectrum, it can thus be determined which of the markers 13 should be visible by the "left" and the "right" imaging sensor perspective of the camera system 21. In other words, it may be considered in step 110 that some markers 13 may only be visible from the perspective of the "right" imaging sensor, while other markers 13 may only be visible from the perspective of the "left" imaging sensor. In a similar manner, it may be considered in step 110 based on the additional geometric information that only a subset of the markers 13 is visible in the current orientation of the substrate 15 as determined in the visible light spectrum (e.g., it may be taken into account that only the markers 13 on one side of a pyramidal substrate 15 are currently visible in the infrared spectrum).

The method illustrated in Fig. 4 may further comprise tracking the tracker 12 based on third image data captured in the infrared spectrum and using the assigned marker identities 18. Such a tracking may be performed during a navigated surgical procedure and in the context of providing navigation instructions to a surgeon or surgical robot. The third image data may be captured by the same cameras or camera modules (e.g., a stereo camera) that captured the first image data 34. Alternatively, the third image data may be captured by a different camera or camera system.

The assigned marker identities may be exploited in a preparatory fitting step preceding the tracking based on the third image data. The preparatory step may comprise a fitting between the pre-determined marker arrangement and a captured marker arrangement, that exploits the assigned marker identities. Exploiting the assigned marker identities may comprise a fitting-based mapping between individual markers of the pre-determined marker arrangement and the captured marker arrangement. Such a fitting-based mapping can be repeated when the tracking system has lost the tracker pose (e.g., because of line-of-sight issues).

The technique described herein allows assigning marker identities based on image data. As a result, the tracker 12 does not require complex communication devices for communicating with the device 11, such as a wireless data transmission device or a controller that triggers active markers 13 in a discernable sequence. Since the tracker 12 does not require an electric device for communication, the tracker 10 may be a passive tracker 10, i.e., with no electrical devices. Also, the tracker 10 may be configured so that the active markers 13 need not be configured to be individually activatable (e.g., may have an "always-on" configuration). Moreover, the technique described herein particularly useful for trackers 12 having a large number of markers 13 and/or in cases in which not all markers 13 are visible in the image data. For at least one of the above reasons, manufacturing costs of the tracker 12 can be reduced. Of course, the technique presented herein could also be performed for a tracker 10 having communication capabilities and individually activatable markers 13 (e.g., to enhance the accuracy of marker identification).

The features described in relation to the exemplary embodiments shown in the drawings can be readily combined to result in different embodiments. It is apparent, therefore, that the present disclosure may be varied in many ways. Such variations are not to be regarded as a departure from the scope of the invention as defined by the claims appended hereto.

## Claims

1. A method (100) for assigning marker identities (18) to markers (13) of a tracker (12), wherein the tracker (12) comprises a reference (14) detectable in a visible light spectrum and wherein the markers (13) are detectable at least in an infrared light spectrum, wherein the markers (13) are arranged in a pre-determined relationship (16) relative to the reference (14) and wherein the pre-determined relationship (16) is indicative of the marker identities (18), wherein the method comprises
receiving (102) first image data (34) of the markers (13) captured in the infrared spectrum;
receiving (104) second image data (36) of the reference (14) captured in the visible light spectrum;
determining (106) the markers (13) in the first image data (34);
determining (108) the reference (14) in the second image data (36); and
assigning (110) the marker identities (18) to the markers (13) determined in the first image data (34) based on the reference (14) determined in the second image data (36) and the pre-determined relationship (16).

2. The method (100) according to claim 1, wherein
the pre-determined relationship (16) defines positions associated with the marker identities (18) relative to the reference (14).

3. The method (100) according to claim 2, wherein assigning the marker identities (18) comprises
determining the positions associated with the marker identities (18) in the second image data based on the reference (14) determined in the second image data (36) and the pre-determined relationship (16); and
transferring the determined positions associated with the marker identities (18) into the first image data (34).

4. The method (100) according to claim 3, wherein
at least one marker identity (18) is assigned to a closest located available marker (13) determined in the first image data (34).

5. The method (100) according to claim 3 or 4, wherein
the marker identities (18) are assigned in an order that prioritizes shortness of distances between the determined markers (13) and transferred positions of the marker identities (18) available for assignment.

6. The method (100) according to any of the preceding claims, further comprising
providing a virtual marker template (38) that defines a combination of a pre-determined (16) unmodified version of the reference (14) and the pre-determined relationship (16); and
modifying the virtual marker template (38) in such a way that the reference (14) of the marker template (38) aligns with the reference (14) determined in the second image data (36), wherein the marker identities (18) are assigned based on the modified relationship (17) of the modified marker template (39).

7. The method (100) according to claim 6, wherein
modifying the virtual marker template (38) comprises at least one of rotating, translating, scaling, bending, stretching and compressing the virtual marker template (38).

8. The method (100) according to any of the preceding claims, wherein
one or more of the markers (13) comprise an infrared light emitting diode, IR-LED.

9. The method (100) according to any of the preceding claims, wherein
the tracker (12) comprises a substrate (15) supporting the markers (13), wherein the substrate (15) is at least one of bendable, stretchable and compressible so that relative positions between the markers (13) are variable.

10. The method (100) according to any of the preceding claims, further comprising
tracking the tracker (12) based on third image data captured in the infrared spectrum and using the assigned marker identities (18).

11. The method (100) according to any of the preceding claims, wherein
the reference (14) comprises at least one of: one or more of the markers (13), at least a portion of a tracker contour, one or more electrical connections of the markers (13), a reference printing (28), and a dedicated reference element (30).

12. The method (100) according to any of the preceding claims, wherein
the first and second image data (34, 36) were captured under at least essentially the same viewing angle.

13. A computer program product, comprising instructions that, when executed by at least one processor, cause the at least one processor to carry out any of the methods of claims 1 to 12.

14. A device (11) for assigning marker identities (18) to markers (13) of a tracker (12), wherein the tracker (12) comprises a reference (14) detectable in a visible light spectrum and wherein the markers (13) are detectable at least in an infrared light spectrum, wherein the markers (13) are arranged in a pre-determined relationship (16) relative to the reference (14) and wherein the pre-determined relationship (16) is indicative of the marker identities (18), wherein the device (11) is configured to
receive first image data (34) of the markers (13) captured in the infrared spectrum;
receive second image data (36) of the reference (14) captured in the visible light spectrum;
determine the markers (13) in the first image data (34);
determine the reference (14) in the second image data (36);
assign the marker identities (18) to the markers (13) determined in the first image data (34) based on the reference (14) determined in the second image data (36) and the pre-determined relationship (16).

15. The device (11) according to claim 14, configured to perform at least one of the steps according to any of claims 2 to 12.

16. A tracking system (10) comprising
the device (11) according to claim 14 or 15; and
the tracker (12).

17. The tracking system (10) according to claim 16 when depending at least on claim 8, wherein
the IR-LED is configured to emit light continuously.

18. The tracking system (10) according to claim 16 or 17, further comprising
a camera system (21) with an IR camera module configured to capture the first image data (34) and an optical camera module configured to capture the second image data (36), wherein the IR camera module and the optical camera module are configured or configurable to assume substantially the same viewing angle.
